# EUROPEAN PATENT APPLICATION

(11) **EP 2 604 802 A1**
(43) Date of publication of application: **19.06.2013**
(21) Application number: 12195589.2
(22) Date of filing: 05.12.2012
(51) Int. Cl.: F01D 11/00, F01D 11/02, F01D 11/04, F01D 25/18, F16J 15/34, F01D 25/22

(54) **An air riding seal arrangement**

(30) Priority: 12.12.2011 GB 201121232
(71) Applicant: Rolls-Royce plc, London SW1E 6AT (GB)
(72) Inventor: Davies, Christopher, Eggington, Derbyshire DE65 6HQ (GB); Jahn, Ingo Henry Johannes, Derby, DE73 5PZ (GB)
(74) Representative: Gee, Philip David

(57) **Abstract**

An air riding seal arrangement comprises two components 8, 12 which are relatively rotatable so that aerodynamic forces causes a supporting air film to be generated between them. At least one of the components 8, 12 comprises a cylindrical surface 22, 24 provided with a rib 26, 28. The rib 26, 28 serves to restrict the flow of liquid, such as lubricant, deposited on the cylindrical surface 22, 24 towards the gap between the components 8, 12. The rib further serves to draw lubricant away from the gap by surface tension effects, when both of the components 8, 12 are stationary.

## Description

This invention relates to an air riding seal arrangement between two components that are rotatable relatively to each other and is particularly, although not exclusively, concerned with an air riding seal arrangement between relatively static and rotating stages of a turbomachine.

Air riding seals are known, for providing a seal between relatively rotating parts. In many cases, one of the parts will be stationary, but air riding seals may also be used between two rotating parts, which may rotate in the same direction as each other, or in opposite directions. For ease of explanation, the parts will be referred to in this specification as a rotating part and a stationary part, but it will be appreciated that, in other embodiments, the "stationary" part may itself rotate.

A typical air riding seal comprises a runner which is mounted on the rotating part and a stationary element which is mounted on the stationary part. The runner may, for example, be made from a metallic material, and the stationary element may be made from a self-lubricating material such as carbon.

The runner and the stationary element have axial sealing faces which are disposed face-to-face. When relative rotation occurs between the rotating and stationary parts, a film of air is drawn between the sealing faces, causing them to lift off from each other so that a cushion of air is formed between them. Consequently, there is no face-to-face contact between the runner and the stationary element once the relative speed of rotation exceeds a threshold value, and sliding friction between the faces is substantially eliminated. The gap between the faces is very small, and effectively prevents flow from one side of the seal to the other.

Air riding seals may be used in gas turbine engines. For example, the seals may provide sealing between shafts of the engine, rotating at different speeds, or between a rotating shaft and a stationary component. Air riding seals may be employed to seal between regions of the engine containing air at different pressures, or to prevent escape of a liquid, such as lubricating oil, from a region in which it is to be confined.

If an air riding seal is employed in an environment in which a lubricant such as oil, or another liquid, is present, there is a danger that the lubricant will migrate between the sealing faces when the rotating component is stationary. On start-up of the engine, the lubricant creates viscous drag between the sealing faces with the result that high forces are required to overcome the fluid shear and surface tension effects to generate rotation of the rotating component. These forces can be significant and can lead to damage of the sealing faces. If an engine has more than one air riding seal on a single rotating component, such as a compressor or turbine spool, the combined effect of lubricant ingress between the sealing faces of the seals can lead to a torque requirement which is higher than the aerodynamic loads applied to the spool on start-up so that the spool rotation is prevented. This problem can be particularly severe under cold start conditions.

According to the present invention there is provided an air riding seal arrangement between two components that are rotatable relatively to each other about a rotational axis, the components comprising respective seal surfaces which are parallel to each other and are axially spaced apart, in operation of the seal arrangement, with respect to the rotational axis, at least one of the components having an axially extending circumferential surface extending from the radially outer periphery of the respective seal surface, the circumferential surface having a circumferential rib which extends freely from the circumferential surface at an axial position spaced from the seal surface.

In this specification, the expression "extends freely" is employed to mean that the circumferential rib extends away from the circumferential surface without contact with any other component over substantially its entire circumferential extent.

The geometry of the rib may be asymmetric about the rotational axis. The rib may have a cross-section which varies in the circumferential direction. The rib may undulate in the circumferential direction so as to define a wave shape as it follows the circumferential surface. The rib may be discontinuous, for example the rib may be interrupted by slots which extend axially so as to provide openings in the rib.

The component provided with the rib may be cylindrical, the seal surface of the respective component being perpendicular to the rotational axis. The axially extending circumferential surface may be disposed at or radially outward of the radially outer periphery of the respective seal surface.

The circumferential rib may be relatively narrow in relation to the axial extent of the axially extending circumferential surface. For example, the axial width of the circumferential rib may be not greater than 25% of the axial length of the axially extending circumferential surface. The circumferential rib may be situated close to, but spaced from, the respective seal surface. For example, the distance between the circumference rib and the respective seal surface may be not greater than 25% of the axial length of the axially extending circumferential surface.

Both of the components may be provided with a circumferential rib as defined above.

The seal surface on one of the components may be formed on a metallic material, and the seal surface on the other component may be formed on carbon or on a carbon composite material. It will be appreciated that one or both of the seal surfaces may be formed on ceramic material, composite material or combinations of metallic, carbon, ceramic or composite materials.

The, or each, rib and/or circumferential surface may comprise a surface coating, treatment or finish which enhances oil shedding from the rib and/or circumferential surface.

Another aspect of the present invention comprises a machine having an air riding seal arrangement as defined above. A lubricant-containing cavity may be defined in the machine, the air riding seal providing a seal between the interior and the exterior of the cavity. One of the components may be fixed for rotation with a shaft of the machine, and the other component may be fixed with respect to a stationary housing of the machine. Alternatively, both of the components may be rotatable with respect to a stationary housing of the machine and rotatable with respect to each other. The components may be rotatable with respect to the stationary housing in the same or in opposite directions. The machine may be a gas turbine engine.

For a better understanding of the present invention, and to show more clearly how it may be carried into effect, reference will now be made, by way of example, to the accompanying drawings, in which:-
Figure 1 is a schematic sectional view of a known air riding seal; and
Figure 2 is a schematic sectional view of an air riding seal in accordance with the present invention.

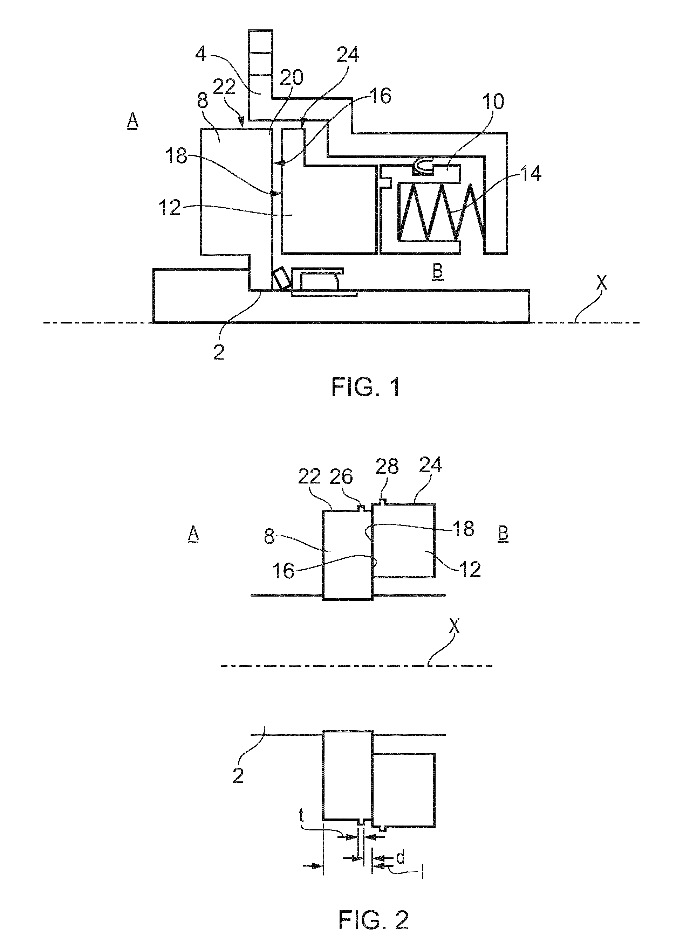

The seal arrangement shown in Figure 1 provides a seal between a first component in the form of a rotating shaft 2 and a second component in the form of a housing 4. The shaft 2 is rotatable about an axis X, and it will be appreciated that the seal arrangement is substantially axi-symmetric about the axis X.

A seal element 8 is mounted on the shaft 2 so that the sealing element 8, which can be regarded as a runner, is rotationally fixed with respect to the shaft 2.

A further carrier 10 carries a stationary sealing element 12 in such a manner that the sealing element 12 is fixed with respect to the housing 4, and consequently does not rotate with the shaft 2. The stationary sealing element 12 is biased by a spring 14 towards the runner 8.

The runner 8 and the stationary sealing element 12 have oppositely disposed seal surfaces 16, 18 which, when the shaft 2 is stationary, are in contact with each other under the influence of the spring 14. The sealing face 16 of the runner is provided with formations 20 (not visible) which provide an aerodynamic lifting force when the shaft 2 rotates. The formations 20 may, for example, take the form of spiral grooves in the seal surface 16.

When the shaft 2 rotates about the axis X at a speed above a threshold, the aerodynamic lift generated between the seal surfaces 16 and 18 causes the stationary sealing element 12 to be displaced away from the seal surface 16 of the runner 8 by a small distance. The resulting gap is filled by a relatively stiff layer of air which not only prevents face-to-face contact between the seal surfaces 16, 18, but also prevents flow across the seal, i.e. from a first region A to a second region B.

Consequently, the seal arrangement is able to maintain a pressure difference between the regions A and B and/or to prevent the transfer of fluid between the regions A and B. For example, the region A may be a bearing chamber accommodating a lubricated bearing (not shown), with the result that the region A may contain a mist of lubricant droplets in air. It is also possible that lubricant delivery systems, such as jets, may supply lubricant to the region A, for example to supply lubricant to the bearing. The seal arrangement shown in Figure 1 may thus be provided in order to prevent migration of the lubricant from the region A to the region B.

The runner 8 and the stationary sealing element 12 have cylindrical outer surfaces 22, 24. Lubricant within the region A may settle on these surfaces 22, 24, and migrate towards the interface between the seal surfaces 16, 18. The presence of lubricant between the seal surfaces 16, 18 may cause a problem during start-up, i.e. when the shaft 2 begins to rotate. This is because the lubricant creates significant drag between the stationary sealing element 12 and the runner 8, which needs to be overcome by the torque applied to the shaft 2. On start-up of a gas turbine engine, in which the shaft 2 may be part of, or be driven by, a spool of the engine, the aerodynamic torque applied to the spool may be insufficient to overcome the drag created by the lubricant, particularly if the seal arrangement is one of several similar seal arrangements in the engine.

Figure 2 shows, in schematic form, a seal arrangement in accordance with the present invention. The seal arrangement may have generally the same form as that shown in Figure 1, but, in Figure 2, only the shaft 2, the runner 8 and the stationary sealing element 12 are represented. In the embodiment shown in Figure 2, the runner 8 may be made from a metallic material, while the stationary sealing element 12 may be made from carbon.

The axially extending cylindrical surfaces 22, 24 are provided with respective circumferential ribs 26, 28. These ribs project radially outwardly of the cylindrical surfaces 22, 24, and extend circumferentially around the entire periphery of the runner 8 and the stationary sealing element 12. The ribs 26, 28 project freely into the region A, and neither their axial end surfaces nor their outer peripheral surfaces are in contact with any other component of the seal arrangement or of the engine as a whole.

The ribs 26, 28 are spaced from the respective seal surfaces 16, 18, but are nevertheless relatively close to those seal surfaces. Thus, the ribs 26, 28 are spaced from the respective seal surfaces 16, 18 by a distance d which is not more than 25% of the total axial length / of the respective circumferential surface 22, 24. Also, the axial thickness t of the ribs 26, 28 is small in relation to the axial length / of the respective cylindrical surface 22, 24, for example less than 25%, and possibly less than 10%, of the length /.

When the shaft 2 is stationary, any lubricant that has settled on the cylindrical surfaces 22, 24 on the side of the respective rib 26, 28 away from the sealing faces 16, 18 will be prevented by the ribs 26, 28 from reaching the gap between the sealing faces 16, 18. This lubricant will, instead, flow under gravity around the cylindrical surfaces 22, 24 to the lowest point, from which it will then fall into the lower part of the region A.

In view of the proximity of the ribs 26, 28 to the seal surfaces 16, 18, only a relatively small quantity of lubricant will accumulate on the cylindrical surfaces 22, 24 on the sides of the ribs 26, 28 nearer to the seal surfaces 16, 18. Nevertheless, surface tension effects will cause such lubricant to be drawn towards the ribs 26, 28 so as to flow, as before, to the lowest point of the cylindrical surfaces 22, 24 and of the ribs 26, 28, to fall into the lower part of the region A.

The ribs 26, 28 consequently act both as dams to prevent flow of lubricant towards the seal surfaces 16, 18, and as wicking devices to draw fluid away from the seal surfaces 16, 18. The ribs 26, 28 thus substantially reduce the migration of lubricant between the seal surfaces 16, 18, so reducing the torque requirement on start-up of the shaft 2. It will be appreciated also that any lubricant that has migrated between the sealing faces 16, 18 as the lubricant flows towards the lowermost point will be drawn, by the wicking effect, away from the interface between the seal surfaces 16, 18.

Although the effect of the ribs 26, 28 has been described when the shaft 2 is stationary, the ribs 26, 28 will also act as wicking devices when the shaft 2 rotates. The centrifugal force acting on oil which collects on the ribs 26, 28 as the shaft 2 slows down is greater than the centrifugal force acting on the oil which collects on the cylindrical surfaces 22, 24. Consequently, as oil is shed from the ribs 26, 28 by the greater centrifugal force, oil which collects on the cylindrical surfaces 22, 24 is drawn to the respective ribs 26, 28.

The wicking effect can be improved by applying a coating to the ribs 26, 28, or applying a suitable surface finish or treatment. Furthermore, oil shedding from the cylindrical surfaces 22, 24 or the ribs 26, 28 could be improved by applying a suitable coating, for example an oleophobic coating, or by applying a suitable surface finish or treatment.

The reduced drag achieved by minimising or preventing ingress of lubricant between the sealing faces 16, 18 enables large-diameter air riding seal arrangements to be used, for example in large civil aero-engine applications.

It will be appreciated that, although the present invention has been described in the context of seal arrangements in gas turbine engines, similar seal arrangements can be employed in other equipment, such as pumps. It will be appreciated that the seal arrangement would be suitable for inter-shaft sealing between two shafts which rotate with respect to each other.

In many applications, the seal arrangement will be employed in ambient surroundings consisting predominantly of air. However, it will be appreciated that the seal arrangement may be employed in other environments, in which the surrounding gas is other than air. The description of the seal arrangement as an "air riding" seal arrangement is therefore to be interpreted as designating a seal arrangement which is suitable for operation in air, even if, in some applications, it is also operable in other gases.

## Claims

1. An air riding seal arrangement between two components that are rotatable relatively to each other about a rotational axis (X), the components comprising respective seal surfaces (16, 18) which are parallel to each other and are axially spaced apart, in operation of the seal arrangement, with respect to the rotational axis, at least one of the components having an axially extending circumferential surface (22, 24) extending from the radially outer periphery of the respective seal surface, the circumferential surface having a circumferential rib (26, 28) which extends freely from the circumferential surface at an axial position spaced from the seal surface.

2. An air riding seal arrangement according to claim 1, in which the component provided with the rib is cylindrical, the seal surface of the respective component being perpendicular to the rotational axis.

3. An air riding seal arrangement according to claim 1 or 2, in which the axially extending circumferential surface is disposed radially outward of the radially outer periphery of the respective seal surface.

4. An air riding seal arrangement according to any one of claims 1 to 3, in which the axial width of the circumferential rib is not greater than 25% of the axial length of the axially extending circumferential surface.

5. An air riding seal arrangement according to any one of the preceding claims, in which the distance between the circumferential rib and the respective seal surface is not more than 25% of the axial length of the axial extending circumferential surface.

6. An air riding seal arrangement according to any one of the preceding claims, in which both of the components are provided with a said circumferential rib.

7. An air riding seal arrangement according to any one of the preceding claims, in which the seal surface on one of the components is formed on a metallic material and the seal surface on the other component is formed on carbon or on a carbon composite material.

8. An air riding seal arrangement according to any one of the preceding claims, in which the, or each, rib and/or circumferential surface comprises a surface coating, treatment or finish which enhances oil shedding from the rib and/or circumferential surface.

9. A machine having an air riding seal in accordance with any one of the preceding claims.

10. A machine as claimed in claim 9, in which a lubricant-containing cavity is defined, the air riding seal providing a seal between the interior and the exterior of the cavity.

11. A machine in accordance with claim 9 or 10, in which one of the components is fixed for rotation with a shaft of the machine and the other component is fixed with respect to a stationary housing of the machine.

12. A machine in accordance with claim 9 or 10, in which both of the components are rotatable with respect to a stationary housing of the machine and are rotatable with respect to each other.

13. A machine according to any one of claims 9 to 12, which is a gas turbine engine.
